# EUROPÄISCHE PATENTSCHRIFT

(11) **EP 1 953 362 B1**
(45) Veröffentlichungstag und Bekanntmachung des Hinweises auf die Patenterteilung: **18.06.2014**
(21) Anmeldenummer: 08000723.0
(22) Anmeldetag: 16.01.2008
(51) Int. Cl.: F02B 29/04, F01P 7/02, F01P 7/10

(54) **Vorrichtung und Verfahren zur Regelung der Ladelufttemperatur**
Method and device for controlling charge air temperature
Procédé et dispositif destinés à la régulation de la température de l'air de suralimentation

(30) Priorität: 03.02.2007 DE 102007005393
(43) Veröffentlichungstag der Anmeldung: 06.08.2008
(73) Patentinhaber: Behr Industry GmbH & Co. KG, 70469 Stuttgart (DE)
(72) Erfinder: Heide, Steffen, 70806 Kornwestheim (DE); Hendricks, Jens, 71739 Oberriexingen (DE)
(74) Vertreter: BRP Renaud & Partner

(56) Entgegenhaltungen:
- WO-A1-2006/079180
- DE-A1- 10 043 579
- US-A1- 2002 069 859
- US-A1- 2004 139 943

## Beschreibung

Die Erfindung betrifft eine Vorrichtung zur Regelung der Ladelufttemperatur nach dem Oberbegriff des Patentanspruches 1 sowie ein Verfahren zur Regelung der Ladelufttemperatur nach dem Oberbegriff des Patentanspruches 4.

Ladeluftkühler werden bei aufgeladenen Brennkraftmaschinen, z. B. bei Dieselmotoren eingesetzt, um die im Kompressor oder Turbolader verdichtete Luft zu Erhöhung des Liefergrades abzukühlen. Die Kühlung der Ladeluft erfolgt entweder über Umgebungsluft oder über ein in einem Kühlmittelkreislauf der Brennkraftmaschine umgewälztes Kühlmittel. Im Falle der Luftkühlung wird die Kühlluft über einen Lüfter, vorzugsweise über einen regelbaren Lüfter gefördert, der vor oder hinter dem Ladeluftkühler angeordnet ist.

Durch die DE 32 22 851 C1 wurde ein regelbarer Lüfterantrieb für eine Kühlanlage, insbesondere für Schienenfahrzeuge bekannt, wobei der Antrieb des Lüfters über einen regelbaren Hydromotor erfolgt. Die Kühlanlage weist einen luftgekühlten Kühlmittelkühler auf, bei welchem die Austrittstemperatur des Kühlmittels über einen Temperaturfühler gemessen und als Eingangssignal einem Regler zugeleitet wird, welcher die Drehzahl des Lüfters steuert.

Durch die DE 103 35 567 A1 wurde eine Vorrichtung zur Kühlung von Ladeluft bekannt, bei der ein Niederdruck-Ladeluft/Kühlmittel-Kühler für eine erste Kühlstufe und ein Hochdruck-LadeluftlLuft-Kühler für eine zweite Kühlstufe vorgesehen sind. Der luftgekühlte Ladeluftkühler ist dabei in Luftströmungsrichtung vor einem Kühlmittelkühler angeordnet, wobei der Ladeluft- und der Kühlmittelkühler Komponenten eines Kühlmoduls sind.

Durch die DE 10 2004 060 658 A1 wurde eine Kreislaufanordnung zur Kühlung von Ladeluft für eine Brennkraftmaschine bekannt, wobei der Ladeluftkühler in einem Niedertemperaturkühlmittelkreislauf angeordnet ist, d. h. durch eine Flüssigkeit gekühlt wird. An der Kühlmittelaustrittsseite des Ladeluftkühlers ist ein Temperatur-Sensor angeordnet, welcher die Kühlmittelaustrittstemperatur erfasst und in Abhängigkeit von der Kühlmittelaustrittstemperatur den Kühlmitteldurchsatz regelt. Vorzugsweise erfolgt die Durchsatzregelung über einen Thermostat, in welchen der Temperatur-Sensor integriert ist.

Bei bekannten luftgekühlten Ladeluftkühlern für Fahrzeuge ergibt sich das Problem, dass die angesaugte Luft bei Lastanforderung der Brennkraftmaschine, z. B. bei einem Dieselmotor stark komprimiert und daher schnell erhitzt wird, wobei der Ladeluftkühler mit seiner Wärmekapazität zunächst einen Teil der Wärme aufnimmt, d. h. als Wärmespeicher oder -puffer wirkt. Bei einer Messung der Ladelufttemperatur an der Austrittsseite des Ladeluftkühlers wird die schnelle Erhitzung der Ladeluft, d. h. ein steiler Temperatur gradient erst verzögert erfasst und somit verzögert einer Regeleinrichtung zugeführt, die verzögert reagiert. Infolge des starken Gradienten der Ladeluftaustrittstemperatur wird die Lüfterdrehzahl dann stark beschleunigt, und es kommt zu einer starken Abkühlung der Ladeluft, möglicherweise zu einer Unterkühlung. Diese thermische Wechselbeanspruchung führt zu Wärmespannungen im Ladeluftkühler - beides kann die Funktion des Ladeluftkühlers, insbesondere von Aluminium-Ladeluftkühlern beeinträchtigen und seine Lebensdauer verkürzen. Auch andere Komponenten der Kühlanlage, z. B. die Hydraulik werden durch eine solche schwingende Regelung stark belastet.

Es ist Aufgabe der Erfindung, eine Vorrichtung zur Regelung der Ladelufttemperatur bei luftgekühlten Ladeluftkühlern dahingehend zu verbessern, dass die thermischen Beanspruchungen des Ladeluftkühlers und die Geräuschentwicklung (durch den Lüfter) reduziert werden. Es ist ferner Aufgabe der Erfindung, ein Verfahren zur Regelung der Ladelufttemperatur bereitzustellen, welches eine geringere thermische Belastung des Ladeluftkühlers zur Folge hat.

Die Aufgabe der Erfindung wird durch die Merkmale des Patentanspruches 1 gelöst. Erfindungsgemäß sind dem Ladeluftkühler ein Temperatur-Sensor zur Messung der Ladeluftaustrittstemperatur und ein weiterer Temperatur-Sensor zur Messung der Ladetufteintrittstemperatur zugeordnet. Damit wird der Vorteil einer verbesserten Regelgüte erreicht, weil der starke Temperaturgradient am Ladelufteintrittsbereich verzögerungsfrei erfasst und in ein Steuerungssignal umgesetzt wird. Sobald der Temperatur-Sensor auf der Eintrittsseite den Temperaturanstieg - infolge einer Lastanforderung der Brennkraftmaschine - erfasst, meldet er dies als Eingangssignal an die Regeleinrichtung, welche die Lüfterdrehzahl und damit den Kühlluftdurchsatz durch den Ladeluftkühler erhöht. Der Lüfter läuft somit schon mit einer erhöhten Drehzahl, bevor der Temperatur-Sensor auf der Ladeluftaustrittsseite die erhöhte Ladelufttemperatur erfasst. Die Lüfterdrehzahl muss dann nur noch geringfügig korrigiert werden. Damit werden die Geräusche durch das Hochlaufen des Lüfters und die hohen thermischen Wechselbeanspruchungen reduziert. Gerade bei Aluminium-Wärmeübertragem, die eine geringe Warmfestigkeit aufweisen und schneller thermisch ermüden, wirkt sich die verbesserte Regelung besonders vorteilhaft aus.

Die Aufgabe der Erfindung wird auch durch ein Verfahren mit den Merkmalen des Patentanspruches 4 gelöst. Dabei ist erfindungsgemäß vorgesehen, dass einerseits die Ladeluftaustrittstemperatur und andererseits die Ladelufteintriftstemperatur gemessen und als getrennte Eingangssignale einer Regeleinrichtung zugeleitet werden.

Bevorzugt wird dann bei einem starken Anstieg der Ladelufteintrittstemperatur die Lüfterdrehzahl auf eine Grunddrehzahl angehoben, weiche in einem bevorzugten Bereich von 25 bis 30 % der maximalen Lüfterdrehzahl liegt. Damit wird eine lastabhängige Vorkühlung erreicht, die das extreme Aufheizen des Ladeluftkühlers verhindert, d. h. die thermische Beanspruchung vermindert. Ferner werden Wärmespannungen im Ladeluftkühler reduziert. Die Lebensdauer des Ladeluftkühlers, insbesondere bei Wärmeübertragern aus Alumirliumwerkstoffen und auch der übrigen Komponenten der Kühlanlage wird erhöht.

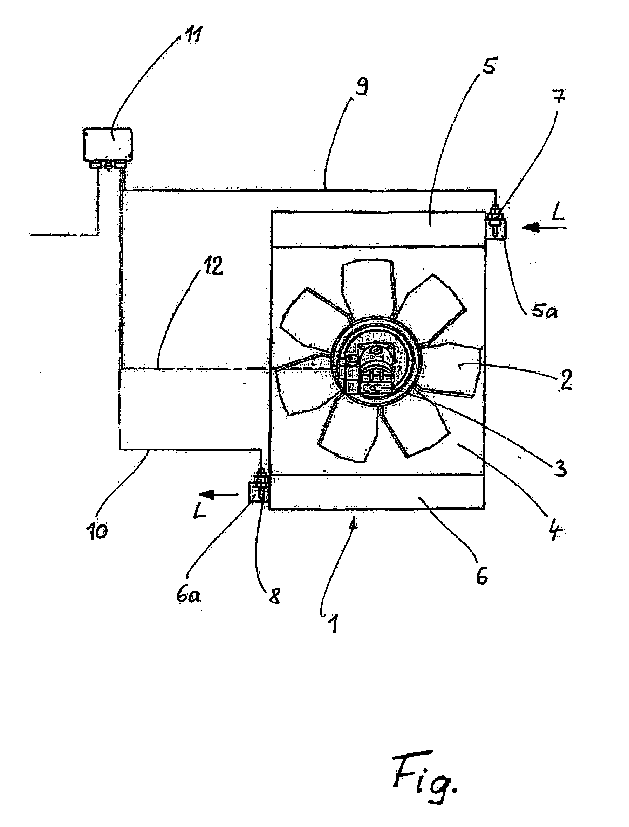

Ein Ausführungsbeispiel der Erfindung ist in der Zeichnung dargestellt und wird im Folgenden näher beschrieben.

Die einzige Figur zeigt einen Ladeluftkühler 1 mit einem Axiallüfter 2, welcher durch einen regelbaren Motor 3, z. B. einen Hydromotor angetrieben wird. Der Ladeluftkühler 1 weist ein Netz 4 (Rippen-Rohr-Block), einen oberen Luftkasten 5 mit einem Eintrittsstutzen 5a sowie einen unteren Luftkasten 6 mit einem Austrittsstutzen 6a auf. Der Ladeluftkühler 1, d. h. sowohl die Rohre, die Rippen als auch die Kästen sind vorzugsweise aus Aluminiumwerkstoffen hergestellt. Der Ladeluftkühler 1 wird in Fahrzeugen, z. B. Schienenfahrzeugen, die durch eine aufgeladene Brennkraftmaschine, z. B. einen Dieselmotor angetrieben werden, eingesetzt. Der Ladeluftkühler hat die Aufgabe, die in einem nicht dargestellten Kompressor oder Turbolader verdichtete Ansaugluft für die Brennkraftmaschine herunterzukühlen, damit ein höherer Füllungsgrad für die Zylinder der Brennkraftmaschine erreicht wird. Die verdichtete, erhitze Ladeluft, dargestellt durch einen Pfeil L, tritt über den Eintrittsstutzen 5a in den Luftkasten 5 ein, durchströmt dann das Netz 4, erreicht den unteren Luftkasten 6 und tritt über den Austrittsstutzen 6a wieder aus dem Ladeluftkühler 1 aus, von wo sie dem nicht dargestellten Ansaugtrakt der Brennkraftmaschine zugeführt wird. Im Eintrittsstutzen 5a bzw. generell im Eintrittsbereich des Ladeluftkühlers 1 ist ein erster Temperatur-Sensor 7 zur Messung der Eintrittstemperatur der Ladeluft angeordnet. Im Austrittsstutzen 6a bzw. generell im Austrittsbereich des Ladeluftkühlers 1 ist ein zweiter Temperaturfühler 8 angeordnet, welcher die Austrittstemperatur der Ladeluft misst, Beide Temperatursensoren 7, 8 sind über Signalleitungen 9, 10 mit einer Regeleinrichtung 11 verbunden. Die Regeleinrichtung 11 ist über eine Steuerleitung 12 mit dem regelbaren Motor 3 verbunden.

Die oben beschriebene Vorrichtung zur Regelung der Ladelufttemperatur arbeitet wie folgt: Bei einer Lastanforderung der Brennkraftmaschine, z. B. beim Beschleunigen des Fahrzeuges wird die Ladeluft stark verdichtet und damit aufgeheizt. Die aufgeheizte Ladeluft kann eine Eintrittstemperatur von deutlich über 200° Celsius erreichen. Die Ladelufteintrittstemperatur wird von dem ersten Temperatur-Sensor 7 erfasst und über die Signalleitung 9 an die Regleinrichtung 11 gemeldet. Die Regeleinrichtung 11 verarbeitet das Eingangssignal und erzeugt einen Steuerbebefehl, der über die Steuerleitung 12 an den Motor 3 geleitet wird und diesen zu einer Erhöhung der Grunddrehzahl in Abhängigkeit vom Anstieg der Eintrittstemperatur veranlasst. Vorzugsweise ist bei einem starken Anstieg der Ladelufteintrittstemperatur eine Erhöhung der Lüfterdrehzahl auf eine Lüfterdrehzahl vorgesehen, die vorzugsweise etwa 25 bis 30 % der maximalen Lüfterdrehzahl beträgt. Infolge der erhöhten Lüfterdrehzahl wird mehr Kühlluft durch das Netz 4 des Ladeluftkühlers 1 gesaugt, d. h. es setzt eine lastabhängige Vorkühlung ein, welche verhindert, dass der Aluminiumkühler stark aufgeheizt wird. Ladelufttemperaturen von über 200° wären solchen Aluminiumwärmeübertragem auf die Dauer nicht zuträglich, da Aluminium und seine Legierungen eine geringe Warmfestigkeit besitzen. Durch die erfindungsgemäße Vorkühlung werden die thermischen Wechselbeanspruchungen in ihrer Amplitude reduziert. Darüber hinaus ergibt sich auch eine Verminderung der Lüftergeräusche, da der Lüfter nicht mehr so stark auf eine hohe Lüfterdrehzahl beschleunigt werden muss. Die im Ladeluftkühler 1 abgekühlte Ladeluft erreicht dann den Austrittsstutzen 6a, wo ihre Temperatur durch den zweiten Temperaturfühler 8 erneut gemessen und über die Signalleitung 10 der Regeleinrichtung 11 zugeleitet wird. Je nach Höhe der Ladeluftaustrittstemperatur erfolgt jetzt über die Regeleinrichtung 11 eine Korrektur der Lüfterdrehzahl, welche an den Kühlbedarf angepasst ist. Durch den ersten Temperatur-Sensor 7 auf der Ladelufteintrittsseite wird somit eine verbesserte Regelgüte erreicht, d. h. die Regelung wird beruhigt, indem starke Regelschwingungen vermieden werden. Wegen der geringen Warmfestigkeit von Aluminiumwerkstoffen wird durch die erfindungsgemäße Verbesserung der Regelgüte und die Verhinderung einer hohen Aufheizung die Lebensdauer des Aluminiumwärmeübertragers erhöht.

## Patentansprüche

1. Verfahren zur Regelung der Ladelufttemperatur in einem luftgekühlten Ladeluftkühler (1), wobei der Ladeluftkühler (1) einen Eintrittsbereich (5a) und einen Austrittsbereich (6a) für die Ladeluft aufweist und wobei die Ladelufttemperatur im Austrittsbereich (6a) des Ladeluftkühlers (1) mittels eines ersten Temperatur-Sensors (8) erfasst und als Eingangssignal einer Regeleinrichtung (11) zugeleitet wird, **dadurch gekennzeichnet, dass** die Ladelufttemperatur im Eintrittsbereich (5a) des Ladeluftkühlers (1) mittels eines zweiten Temperatur-Sensors (7) erfasst und als Eingangssignal einer Regeleinrichtung (11) zugeleitet wird und dass die Lüfterdrehzahl und/oder der Kühlluftdurchsatz in Abhängigkeit von der Ladelufteintrittstemperatur geregelt und in Abhängigkeit der Ladeluftaustrittstemperatur korrigiert werden.

2. Verfahren nach Anspruch 1, **dadurch gekennzeichnet, dass** bei ansteigender Ladelufteintrittstemperatur die Lüfterdrehzahl erhöht wird.

3. Verfahren nach Anspruch 2, **dadurch gekennzeichnet, dass** die Lüfterdrehzahl auf eine Grunddrehzahl erhöht wird, die etwa 25 % bis 30 % der maximalen Lüfterdrehzahl beträgt.

4. Vorrichtung zur Regelung der Ladelufttemperatur bei luftgekühlten Ladeluftkühlern für Brennkraftmaschinen, insbesondere für Fahrzeuge, wobei der Ladeluftkühler (1) einen Eintrittsbereich (5a) und einen Austrittsbereich (6a) für die Ladeluft aufweist und wobei dem Ladeluftkühler (1) ein die Kühlluft fördernder regelbarer Lüfter (2, 3) zugeordnet ist, wobei dem Ladeluftkühler (1) ein erster Temperatur-Sensor (8) zugeordnet ist, der die Ladelufttemperatur im Austrittsbereich (6a) misst und an eine Regeleinrichtung (11) weiterleitet, **dadurch gekennzeichnet, dass** dem Ladeluftkühler (1) ein zweiter Temperatur-Sensor (7) zugeordnet ist, der die Ladelufttemperatur im Eintrittsbereich (5a) misst und an eine Regeleinrichtung (11) weiterleitet und dass die Regeleinrichtung (11) die Lüfterdrehzahl und/oder der Kühlluftdurchsatz in Abhängigkeit von der Ladelufteintrittstemperatur regelt und in Abhängigkeit der Ladeluftaustrittstemperatur korrigiert.

5. Vorrichtung nach Anspruch 1, **dadurch gekennzeichnet, dass** die Temperatur-Sensoren (7, 8) im Eintrittsbereich (5a) und im Austrittsbereich (6a) der Ladeluft angeordnet sind.

6. Vorrichtung nach Anspruch 1 oder 2, **dadurch gekennzeichnet, dass** der Ladeluftkühler (1) aus Aluminiumwerkstoffen hergestellt ist.

## Claims

1. A method for controlling the charge air temperature in an air-cooled intercooler (1), wherein the intercooler (1) has an inlet region (5a) and an outlet region (6a) for the charge air, and wherein the charge air temperature in the outlet region (6a) of the intercooler (1) is detected by means of a first temperature sensor (8) and is fed as an input signal to a control device (11), **characterized in that** the charge air temperature in the inlet region (5a) of the intercooler (1) is detected by means of a second temperature sensor (7) and is fed as an input signal to a control device (11), and that the fan rotation speed and/or the cooling air flow rate are controlled as a function of the charge air inlet temperature and are corrected as a function of the charge air outlet temperature.

2. The method according to claim 1, **characterized in that** in the case of a rising charge air inlet temperature, the fan rotation speed is increased.

3. The method according to claim 2, **characterized in that** the fan rotation speed is increased to a base rotation speed which is approximately 25% to 30% of the maximum fan rotation speed.

4. A device for controlling the charge air temperature in air-cooled intercoolers for internal combustion engines, in particular for vehicles, wherein the intercooler (1) has an inlet region (5a) and an outlet region (6a) for the charge air, and wherein a controllable fan (2, 3), conveying the cooling air, is associated with the intercooler (1), wherein a first temperature sensor (8) is associated with the intercooler (1), which first temperature sensor measures the charge air temperature in the outlet region (6a) and passes it to a control device (11), **characterized in that** a second temperature sensor (7) is associated with the intercooler (1), which second temperature sensor measures the charge air temperature in the inlet region (5a) and passes it to a control device (11), and that the control device (11) controls the fan rotation speed and/or the cooling air flow rate as a function of the charge air inlet temperature and corrects it as a function of the charge air outlet temperature.

5. The device according to claim 1, **characterized in that** the temperature sensors (7, 8) are arranged in the inlet region (5a) and in the outlet region (6a) of the charge air.

6. The device according to claim 1 or 2, **characterized in that** the charge air cooler (1) is produced from aluminium materials.

## Revendications

1. Procédé de régulation de la température de l'air de suralimentation dans un refroidisseur d'air de suralimentation (1), dans lequel le refroidisseur d'air de suralimentation (1) présente une zone d'entrée (5a) et une zone de sortie (6a) pour l'air de suralimentation et dans lequel la température d'air de suralimentation dans la zone de sortie (6a)du refroidisseur d'air de suralimentation (1) est détectée au moyen d'un premier capteur de température (8) et est alimentée comme signal d'entrée dans un dispositif de régulation (11), **caractérisé en ce que** la température d'air de suralimentation est détectée dans la zone d'entrée (5a) du refroidisseur d'air de suralimentation (1) au moyen d'un deuxième capteur de température (7) et est alimentée comme signal d'entrée dans un dispositif de régulation (11) et **en ce que** la vitesse de rotation du refroidisseur et/ou le débit d'air de refroidissement sont régulés en fonction de la température d'entrée d'air de suralimentation et sont corrigés en fonction de la température de sortie d'air de suralimentation.

2. Procédé selon la revendication 1, **caractérisé en ce que** la vitesse de rotation du refroidisseur est augmentée lorsque la température d'entrée de l'air de suralimentation augmente.

3. Procédé selon la revendication 2, caractérisé e ce que la vitesse de rotation du refroidisseur est augmentée à une vitesse de rotation de base, qui s'élève à environ 25% à 30% de la vitesse de rotation du refroidisseur maximale.

4. Dispositif de régulation de la température d'air de suralimentation sur des refroidisseurs d'air de suralimentation refroidis à l'air pour moteurs à combustion interne, notamment pour des véhicules automobiles, dans lequel le refroidisseur d'air de suralimentation (1) présente une zone d'entrée (5a) et une zone de sortie (6a) pour l'air de suralimentation et dans lequel un refroidisseur (2, 3) régulable transportant l'air de suralimentation est coordonné au refroidisseur d'air de suralimentation (1), dans lequel un premier capteur de température (8) est coordonné au refroidisseur d'air de suralimentation (1), qui mesure la température d'air de suralimentation dans la zone de sortie (6a)et transmet à un dispositif de régulation (11), **caractérisé en ce que** un deuxième capteur de température (7) est coordonné au refroidisseur d'air de suralimentation (1), qui mesure la température d'air de suralimentation dans la zone d'entrée (5a) et transmet à un dispositif de régulation (11) et **en ce que** le dispositif de régulation (11) régule la vitesse de rotation du refroidisseur et/ou le débit d'air de refroidissement en fonction de la température d'entrée d'air de suralimentation et corrige en fonction de la températures de sortie d'air de suralimentation.

5. Dispositif selon la revendication 1, **caractérisé en ce que** les capteurs de température (7, 8) sont disposés dans la zone d'entrée (5a) et dans la zone de sortie (6a) de l'air de suralimentation.

6. Dispositif selon les revendications 1 ou 2, **caractérisé en ce que** le refroidisseur d'air de suralimentation (1) est fabriqué dans des matériaux d'aluminium.
